# FASCICULE DE BREVET EUROPEEN

(11) **EP 3 868 002 B1**
(45) Date de publication et mention de la délivrance du brevet: **12.03.2025**
(21) Numéro de dépôt: 19806027.9
(22) Date de dépôt: 16.10.2019
(51) Int. Cl.: H02K 5/14

(54) **ENSEMBLE POUR UN PULSEUR DE VEHICULE AUTOMOBILE**
ANORDNUNG FÜR EIN GEBLÄSE EINES KRAFTFAHRZEUGS
ASSEMBLY FOR A MOTOR VEHICLE BLOWER

(30) Priorité: 17.10.2018 FR 1871203
(43) Date de publication de la demande: 25.08.2021
(73) Titulaire: VALEO SYSTEMES THERMIQUES, 78320 Le Mesnil Saint-Denis (FR)
(72) Inventeur: FRANCO, Ismaël, 78322 Le Mesnil Saint-Denis Cedex (FR)
(74) Mandataire: Valeo Systèmes Thermiques
(86) Numéro de dépôt international: PCT/FR2019/052450
(87) Numéro de publication internationale: WO 2020/079365

(56) Documents cités:
- DE-U1- 202005 008 840
- DE-U1- 8 406 468
- DE-U1- 9 112 104
- JP-U- S4 725 807

## Description

L'invention concerne un ensemble pour un moteur électrique, notamment d'un pulseur de véhicule automobile d'air pour un dispositif de ventilation, de chauffage et/ou de climatisation de véhicule automobile.

Il est connu qu'un tel dispositif de ventilation, de chauffage et/ou de climatisation permet la régulation de la température d'un flux d'air destiné à alimenter l'habitacle du véhicule.

Le pulseur d'air permet, quant à lui, de faire entrer et circuler le flux d'air dans le dispositif de ventilation, de chauffage et/ou de climatisation jusqu'à des bouches de sortie, où l'air pénètre dans l'habitacle.

Le pulseur comporte généralement un moteur électrique, notamment à balais, sur lequel est montée une roue pour mettre l'air en mouvement. Le pulseur comporte également un support moteur dans lequel est logé le moteur électrique, ainsi que le dispositif de commande du moteur électrique, le moteur et le dispositif de commande étant connectés l'un à l'autre.

JPS47 25807 et DE 20 2005 008840 divulguent des moteurs avec un agencement de balais avec un bras solidaire du balai, un élément de liaison pivot entre le support et le bras, l'élément pivot étant en élastomère de sorte à exercer un rappel sur le bras.

Il est connu de monter les balais sur des bras mobiles en translation dans un conduit radial entre une position de montage où les bras positionnent les balais éloignés du centre du support, et une position fonctionnelle dans laquelle les balais sont plaqués contre le collecteur disposé au centre du support. Les bras sont munis d'un ressort dont la compression augmente lorsque le balai d'éloigne du centre du support. Ainsi, les balais sont tout d'abord installés dans la position de montage, ce qui permet l'insertion du collecteur au centre du support, les ressorts étant maintenus comprimés. Une fois le collecteur en place, on relâche les bras, les ressorts s'étendent et les bras et les balais se déplacent dans les conduits radiaux de façon à disposer les balais dans la position fonctionnelle.

Néanmoins, une telle configuration est compliquée, à la fois dans sa structure et dans son mécanisme, puisqu'il faut mouler les canaux radiaux, prévoir des ressorts, et s'assurer du bon coulissement des bras dans les canaux. Ainsi, cette configuration présente un procédé de fabrication complexe, avec de nombreuses étapes, et son fonctionnement peut ne pas être fiable durant toute la durée de vie du véhicule automobile.

Le but de l'invention est de remédier au moins partiellement à ces inconvénients.

A cet effet, l'invention a pour objet un ensemble selon la revendication 1.

Ainsi, grâce à la présente invention, l'assemblage du pulseur est grandement facilité, puisque, d'une part, on évite de recourir à des ressorts pour plaquer les balais sur le collecteur du moteur électrique. D'autre part, le matériau élastomère rend possible d'autres types de mouvement pour les balais, notamment des mouvements de pivotement, ce qui permet de ne pas avoir à mouler de conduits radiaux.

Selon une autre caractéristique de l'invention, la zone d'amincissement présente un amincissement de matière continu entre les deux zones d'interface.

Selon une autre caractéristique de l'invention, la zone d'interface avec le bras comprend une partie d'encastrement conformée pour s'insérer dans un orifice associé du bras, une embase conformée pour prendre appui contre le bras et une partie dite intermédiaire entre l'embase et la zone d'amincissement.

Selon une autre caractéristique de l'invention, ladite partie intermédiaire de la zone d'interface avec le bras présente une forme rectiligne convergeant depuis l'embase jusqu'à la zone d'amincissement.

Selon une autre caractéristique de l'invention, la zone d'interface avec le support comprend une partie d'encastrement conformée pour s'insérer dans un orifice associé du support, une embase conformée pour prendre appui contre le support et une partie dite intermédiaire entre l'embase et la zone d'amincissement.

Selon une autre caractéristique de l'invention, la partie intermédiaire présente une forme rectiligne convergeant depuis l'embase jusqu'à la zone d'amincissement.

Selon une autre caractéristique de l'invention, le matériau élastomère est un polymère d'une dureté Shore comprise entre 70 et 90.

Selon une autre caractéristique de l'invention, l'élément de liaison pivot est conformé de sorte que, lorsque l'ensemble est associé à un moteur électrique comprenant un collecteur, l'effort de rappel exercé sur le bras déplace le bras dans un sens de rapprochement du collecteur.

Selon une autre caractéristique de l'invention, l'élément de liaison pivot est surmoulé ou encastré sur le support et/ou sur le bras.

L'invention a également pour objet un pulseur pour un dispositif de ventilation, de chauffage et/ou de climatisation pour véhicule automobile, comprenant un moteur électrique muni d'un collecteur et d'un ensemble tel que décrit précédemment, l'ensemble étant conformé de sorte que le balai est plaqué contre le collecteur dans une position de fonctionnement du pulseur.

Selon une autre caractéristique de l'invention, l'ensemble comprend deux balais et un dispositif de déplacement de balai associé à chaque balai, appelés premier et deuxième dispositifs de déplacement, chaque dispositif de déplacement de balai étant solidaire du support par une partie de solidarisation, et dans lequel le support présente une forme annulaire, la partie de solidarisation du premier dispositif étant diamétralement opposée de la partie de solidarisation du deuxième dispositif, et chaque élément de liaison pivot étant conformé pour que, dans une position de repos, le bras associé s'étende le long d'un rayon du support.

L'invention a également pour objet un dispositif de ventilation, de chauffage et/ou de climatisation pour véhicule automobile, comprenant un pulseur tel que décrit précédemment.

### Brève description des dessins

D'autres caractéristiques, détails et avantages de l'invention apparaîtront à la lecture de la description détaillée ci-après, et à l'analyse des dessins annexés, sur lesquels :
La figure 1 illustre une vue en perspective d'un ensemble selon la présente invention dans une première position, dite position de montage.
La figure 2 une vue en perspective de l'ensemble de la figure 1 dans une deuxième position, dite position fonctionnelle.
La figure 3 illustre une vue de dessus d'un bras et d'un élément de liaison pivot de l'ensemble de la figure 1.
La figure 4 illustre une vue de dessus de l'élément de liaison pivot de la figure 3.
La figure 5 illustre une vue de dessus de l'élément de liaison pivot selon une autre variante de réalisation.

### Description des modes de réalisation

### Pulseur, dispositif de ventilation, chauffage et/ou climatisation

L'invention a pour objet un ensemble pour un moteur électrique, référencé 1 dans les figures.

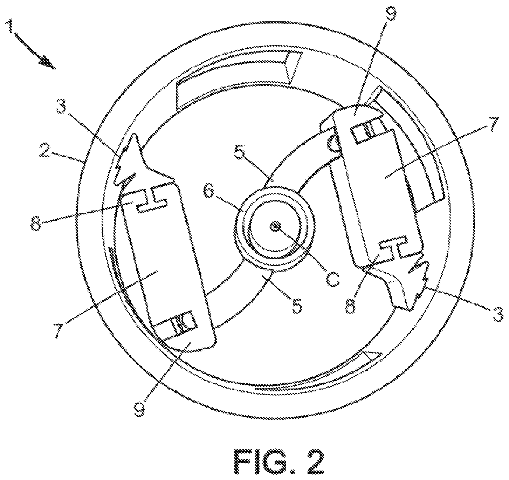

L'invention a également pour objet un pulseur (non illustré) comprenant l'ensemble 1 ainsi qu'un moteur électrique dont un collecteur est illustré sur la figure 2.

L'invention a également pour objet un dispositif de ventilation, de chauffage et/ou de climatisation pour un véhicule automobile (non illustré) équipé dudit pulseur.

Le dispositif de ventilation, de chauffage et/ou de climatisation permet de réguler la température d'un flux d'air à destination de l'habitacle du véhicule.

Le pulseur permet de faire pénétrer et de mettre en circulation l'air dans le dispositif de ventilation, chauffage et /ou climatisation.

### Ensemble

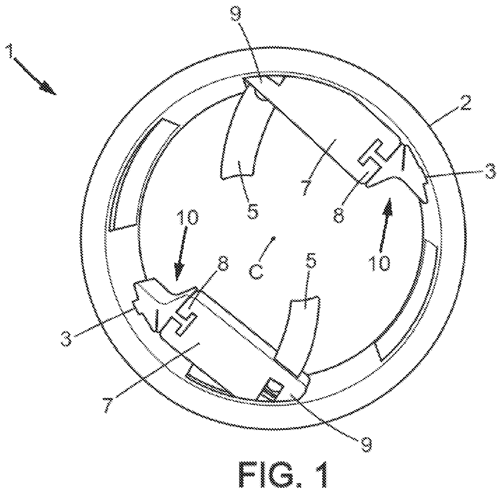

Comme visible sur les figures 1 et 2, l'ensemble 1 pour le moteur électrique du pulseur comprend un support 2.

Sur les figures, le support 2 présente une forme générale de cylindre ouvert. Bien entendu, l'invention n'est pas limitée à cette géométrie.

Comme particulièrement visible sur la figure 2, le support 2 comprend un logement 3, détaillé ultérieurement.

L'ensemble 1 comprend également des balais 5. Sur le mode de réalisation illustré, l'ensemble 1 comprend deux balais. Chaque balai 5 est destiné à être plaqué contre un collecteur 6, visible sur la figure 2, comme il sera détaillé ultérieurement.

L'ensemble 1 comprend également deux bras 7, associés respectivement à l'un des balais 5 ; c'est-à-dire que chaque bras 7 permet le déplacement du balai associé.

Comme il ressort des figures, chaque bras 7 s'étend sensiblement rectilignement selon une direction L entre une première extrémité 8 et une deuxième extrémité 9.

La première extrémité 8 est montée mobile relativement au support 2. Sur les figures, la première extrémité 8 comprend un élément de liaison pivot 10 inséré dans le logement 3 du support 2.

Comme on le constate sur les figures 1 et 2, chaque balai 5 est disposé à proximité de la deuxième extrémité 9 du balai associé. De préférence, chaque balai 5 s'étend selon une direction faisant un angle compris entre 70° et 90° avec la direction L du bras de déplacement associé.

L'élément de liaison pivot 10 va maintenant être décrit en détail.

L'élément de liaison pivot 10 est réalisé à partir d'un matériau élastomère de sorte à exercer un effort de rappel sur le bras dans un sens de rapprochement du centre C du support 2. De préférence, le matériau élastomère est un polymère d'une dureté Shore comprise entre 70 et 90. Le matériau peut être notamment un élastomère constitué de deux polyols et de deux isocyanates (désigné par exemple par le terme « HPE ») et/ou un copolymère Styrène, Ethylène, Butylène. (par exemple la famille de matériau désignée par l'acronyme Anglais « SEBS »).

L'élément de liaison pivot 10 est nommé pivot souple 10 dans la suite de la description.

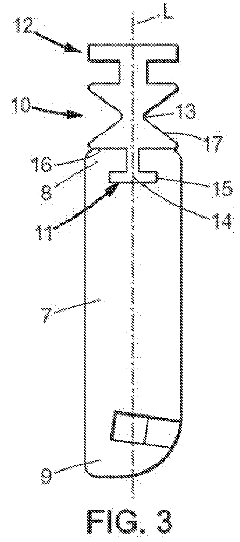

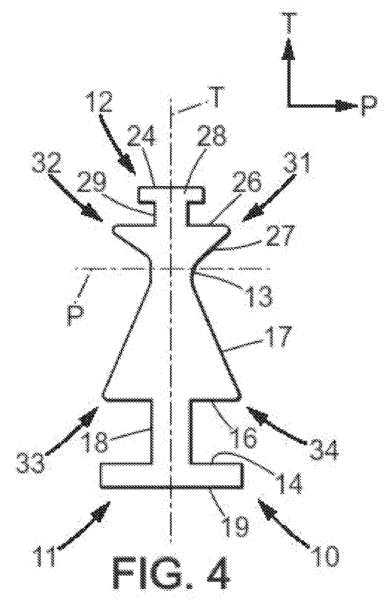

Comme particulièrement visible sur les figures 3 et 4, le pivot souple 10 comprend une zone d'interface avec le bras associé 7, référencée 11 sur les figures, une zone d'interface 12 avec le support 2 et une zone d'amincissement de matière 13 entre les zones d'interface 11 et 12, appelée zone fine 13.

Le mouvement de rotation du pivot 10 est permis grâce à la zone fine 13.

Sur le mode de réalisation illustré, la zone fine 13 présente un amincissement de matière continu entre les deux zones d'interface 11, 12.

Comme visible sur les figures 3 et 4, la zone d'interface 11 comprend une partie d'encastrement 14 conformée pour s'insérer dans un orifice 15 complémentaire associé du bras 7, une embase 16 conformée pour prendre appui contre l'extrémité 8 du bras 7 et une partie 17 dite intermédiaire entre l'embase 16 et la zone fine 13.

Comme particulièrement visible sur la figure 3, la partie d'encastrement 14 et l'orifice associé 15 présentent une forme générale selon la lettre « T ». Le « T » de la partie d'encastrement 14 comprend une tige 18 et une base 19, la base 19 étant orthogonale à la tige 18.

L'embase 16 est une plaque jointive de la tige 18 et s'étendant sensiblement orthogonalement à la tige 18.

La partie intermédiaire 17 présente une forme rectiligne convergeant depuis l'embase 16 jusqu'à la zone fine 13.

De manière analogue, la zone d'interface 12 comprend une partie d'encastrement 24 conformée pour s'insérer dans le logement 3 du support 2, une embase 26 conformée pour prendre appui contre les bords du logement 3 et une partie 27 dite intermédiaire entre l'embase 26 et la zone fine 13.

La partie d'encastrement 24 présente une forme générale selon la lettre « T » munie d'une tige 28 et d'une base 29, la base 29 étant orthogonale à la tige 28.

L'embase 26 est une plaque 30 jointive de la tige 28 et s'étendant sensiblement orthogonalement à la tige 28.

La partie intermédiaire 27 présente une forme rectiligne convergeant depuis l'embase 26 jusqu'à la zone fine 13.

Sur la figure 4, la direction d'extension de la tige 18 coïncide avec la direction d'extension de la tige 28. On note T cette direction. Comme on le constate sur la figure 4, une section longitudinale du pivot souple 10 est symétrique par rapport à la direction T.

Comme déjà indiqué, la zone fine 13 permet le pivotement du pivot 10 autour d'un axe noté P. De préférence, l'axe P est parallèle à l'arbre moteur, quand l'ensemble 1 fait partie du pulseur, ce qui permet de garantir un contact surfacique entre le balai et le collecteur, évitant à la liaison pivot 10 de vriller. Sur la figure 4, l'axe P est orthogonal à la direction d'extension T.

Sur la figure 4, on note 31 à 34 des portions du pivot souple 10 délimitées par l'axe P et la direction T, la portion 31 de la partie intermédiaire 27 faisant face à la portion 34 de la partie intermédiaire 17 et la portion 32 de la partie intermédiaire 27 faisant face à la portion 33 de la partie intermédiaire 17.

Le pivot souple 10 est conformé de sorte que, lorsque l'ensemble est installé dans le pulseur, l'effort de rappel exercé sur le bras déplace le bras dans un sens de rapprochement du collecteur disposé au centre du support, les portions se faisant face 31, 34 et 32, 33 se rapprochant ou s'écartant.

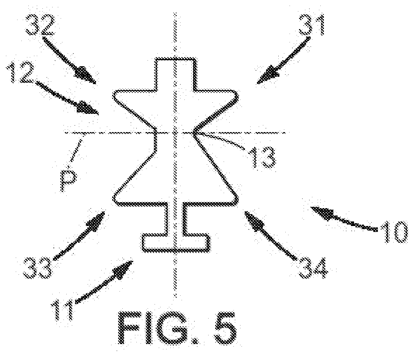

On note que selon la variante de la figure 5, l'amincissement de matière entre les portions 32 et 33 est supérieur à l'amincissement de matière entre les portions 31 et 34. Dans ce cas, l'effort de rapprochement des portions 31 et 34 est différent de celui des portions 32 et 33.

On note également qu'on peut envisager d'autres types de solidarisation de la zone d'interface au bras et/ou au support. En particulier, l'élément de liaison pivot 10 peut être surmoulé sur le support 2 et/ou sur le bras 7.

### Procédé de montage

L'invention est maintenant décrite en relation avec le procédé de montage du pulseur à partir de l'ensemble 1.

Tout d'abord, on positionne l'ensemble 1 dans une position de montage, dans laquelle les bras 7 sont écartés du centre C du support. Puis, on insère le collecteur 6 au centre C du support 2, les bras étant maintenus dans la position de montage. Ensuite, on lâche les bras 7. Du fait de l'effort de rappel de la liaison pivot souple 10, les balais 5 se rapprochent du centre C jusqu'à être plaqués sur celui-ci.

### Avantages apportés

Comme il ressort clairement de la description, le procédé de montage du pulseur selon la présente invention est grandement facilité du fait qu'il n'est pas nécessaire de mouler des conduits de guidage des bras ni d'ajouter des ressorts. De plus, le fonctionnement du pulseur est bien plus fiable grâce à la liaison pivot élastomère.

## Revendications

1. Ensemble pour un moteur électrique, comprenant un support moteur (2), un balai (5) et un dispositif de déplacement (7, 10) dudit balai (5), le dispositif comprenant un bras (7) solidaire du balai (5) et un élément de liaison pivot (10) entre le support (2) et le bras (7), l'élément de liaison pivot (10) étant réalisé à partir d'un matériau élastomère de sorte à exercer un effort de rappel sur le bras (7), **caractérisé en ce que** l'élément de liaison pivot (10) comprend une zone d'interface avec le bras (11), une zone d'interface avec le support (12) et une zone d'amincissement de matière (13) disposée entre lesdites zones d'interface.

2. Ensemble selon la revendication précédente, dans lequel la zone d'amincissement (13) présente un amincissement de matière continu entre les deux zones d'interface (11, 12).

3. Ensemble selon l'une des revendications 1 ou 2, dans lequel la zone d'interface avec le bras (11) comprend une partie d'encastrement (14) conformée pour s'insérer dans un orifice (15) associé du bras (7), une embase (16) conformée pour prendre appui contre le bras (7) et une partie dite intermédiaire (17) entre l'embase (16) et la zone d'amincissement (13).

4. Ensemble selon l'une des revendications 1 ou 2, dans lequel la zone d'interface avec le support (12) comprend une partie d'encastrement (24) conformée pour s'insérer dans un orifice (3) associé du support (2), une embase (26) conformée pour prendre appui contre le support (2) et une partie (27) dite intermédiaire entre l'embase (26) et la zone d'amincissement (13).

5. Ensemble selon l'une des revendications précédentes, dans lequel le matériau élastomère est un polymère d'une dureté Shore comprise entre 70 et 90.

6. Ensemble selon l'une des revendications précédentes, dans lequel l'élément de liaison pivot (10) est conformé de sorte que, lorsque l'ensemble (1) est associé à un moteur électrique comprenant un collecteur (6), l'effort de rappel exercé sur le bras (7) déplace le bras (7) dans un sens de rapprochement du collecteur (6).

7. Ensemble selon l'une des revendications précédentes, dans lequel l'élément de liaison pivot (10) est surmoulé ou encastré sur le support (2) et/ou sur le bras (7).

8. Pulseur pour un dispositif de ventilation, de chauffage et/ou de climatisation pour véhicule automobile, comprenant un moteur électrique muni d'un collecteur (6) et d'un ensemble (1) selon l'une des revendications précédentes, l'ensemble (1) étant conformé de sorte que le balai (5) est plaqué contre le collecteur (6) dans une position de fonctionnement du pulseur.

9. Pulseur selon la revendication précédente, dans lequel l'ensemble (1) comprend deux balais (5) et un dispositif de déplacement de balai (7, 10) associé à chaque balai (5), appelés premier et deuxième dispositifs de déplacement, chaque dispositif de déplacement de balai étant solidaire du support (2) par une partie de solidarisation (10), et dans lequel le support présente une forme annulaire, la partie de solidarisation du premier dispositif étant diamétralement opposée de la partie de solidarisation du deuxième dispositif, et chaque élément de liaison pivot étant conformé pour que, dans une position de repos, le bras associé s'étende le long d'un rayon du support.

## Patentansprüche

1. Anordnung für einen Elektromotor, welche einen Motorträger (2), eine Bürste (5) und eine Vorrichtung zum Bewegen (7, 10) der Bürste (5) umfasst, wobei die Vorrichtung einen mit der Bürste (5) fest verbundenen Arm (7) und ein Schwenkverbindungselement (10) zwischen dem Träger (2) und dem Arm (7) umfasst, wobei das Schwenkverbindungselement (10) aus einem elastomeren Material hergestellt ist, so dass es eine Rückstellkraft auf den Arm (7) ausübt, **dadurch gekennzeichnet, dass** das Schwenkverbindungselement (10) einen Schnittstellenbereich mit dem Arm (11), einen Schnittstellenbereich mit dem Träger (12) und einen Materialverdünnungsbereich (13), der zwischen den Schnittstellenbereichen angeordnet ist, umfasst.

2. Anordnung nach dem vorhergehenden Anspruch, wobei der Verdünnungsbereich (13) eine durchgehende Materialverdünnung zwischen den zwei Schnittstellenbereichen (11, 12) aufweist.

3. Anordnung nach einem der Ansprüche 1 oder 2, wobei der Schnittstellenbereich mit dem Arm (11) einen Einspannteil (14), der dafür ausgebildet ist, in eine zugeordnete Öffnung (15) des Armes (7) eingefügt zu werden, einen Fuß (16), der dafür ausgebildet ist, am Arm (7) zur Anlage zu kommen, und einen Zwischenteil genannten Teil (17) zwischen dem Fuß (16) und dem Verdünnungsbereich (13) umfasst.

4. Anordnung nach einem der Ansprüche 1 oder 2, wobei der Schnittstellenbereich mit dem Träger (12) einen Einspannteil (24), der dafür ausgebildet ist, in eine zugeordnete Öffnung (3) des Trägers (2) eingefügt zu werden, einen Fuß (26), der dafür ausgebildet ist, am Träger (2) zur Anlage zu kommen, und einen Zwischenteil genannten Teil (27) zwischen dem Fuß (26) und dem Verdünnungsbereich (13) umfasst.

5. Anordnung nach einem der vorhergehenden Ansprüche, wobei das elastomere Material ein Polymer mit einer Shore-Härte zwischen 70 und 90 ist.

6. Anordnung nach einem der vorhergehenden Ansprüche, wobei das Schwenkverbindungselement (10) derart ausgebildet ist, dass, wenn die Anordnung (1) einem Elektromotor zugeordnet ist, der einen Kollektor (6) umfasst, die auf den Arm (7) ausgeübte Rückstellkraft den Arm (7) in einer Richtung der Annäherung an den Kollektor (6) bewegt.

7. Anordnung nach einem der vorhergehenden Ansprüche, wobei das Schwenkverbindungselement (10) auf den Träger (2) und/oder auf den Arm (7) aufgeformt oder darin eingebettet ist.

8. Gebläse für eine Belüftungs-, Heiz- und/oder Klimatisierungsvorrichtung für ein Kraftfahrzeug, welches einen Elektromotor umfasst, der mit einem Kollektor (6) und mit einer Anordnung (1) nach einem der vorhergehenden Ansprüche ausgestattet ist, wobei die Anordnung (1) derart ausgebildet ist, dass die Bürste (5) in einer Betriebsposition des Gebläses an den Kollektor (6) angedrückt wird.

9. Gebläse nach dem vorhergehenden Anspruch, wobei die Anordnung (1) zwei Bürsten (5) und für jede Bürste (5) eine ihr zugeordnete Vorrichtung zum Bewegen der Bürste (7, 10), erste und zweite Vorrichtung zum Bewegen genannt, umfasst, wobei jede Vorrichtung zum Bewegen der Bürste mit dem Träger (2) durch einen Verbindungsteil (10) fest verbunden ist, und wobei der Träger eine Ringform aufweist, wobei der Verbindungsteil der ersten Vorrichtung dem Verbindungsteil der zweiten Vorrichtung diametral gegenüberliegt und jedes Schwenkverbindungselement so ausgebildet ist, dass in einer Ruheposition der zugeordnete Arm sich entlang eines Radius des Trägers erstreckt.

## Claims

1. Assembly for an electric motor, comprising a motor support (2), a brush (5) and a movement device (7, 10) for moving said brush (5), the device comprising an arm (7) secured to the brush (5) and a pivot connection element (10) between the support (2) and the arm (7), the pivot connection element (10) being made from an elastomer material so as to exert a return force on the arm (7), **characterized in that** the pivot connection element (10) comprises an interface region that interfaces with the arm (11), an interface region that interfaces with the support (12) and a narrowed region of material (13) disposed between said interface regions.

2. Assembly according to the preceding claim, wherein the narrowed region (13) has a continuous narrowing of material between the two interface regions (11, 12).

3. Assembly according to either of Claims 1 and 2, wherein the interface region that interfaces with the arm (11) comprises a captive-retention part (14) shaped so as to be inserted into an associated orifice (15) of the arm (7), a baseplate (16) shaped so as to bear against the arm (7) and a part called an intermediate part (17) between the baseplate (16) and the narrowed region (13).

4. Assembly according to either of Claims 1 and 2, wherein the interface region that interfaces with the support (12) comprises a captive-retention part (24) shaped so as to be inserted into an associated orifice (3) of the support (2), a baseplate (26) shaped so as to bear against the support (2) and a part (27) called an intermediate part between the baseplate (26) and the narrowed region (13).

5. Assembly according to one of the preceding claims, wherein the elastomer material is a polymer with a Shore hardness of between 70 and 90.

6. Assembly according to one of the preceding claims, wherein the pivot connection element (10) is shaped such that, when the assembly (1) is associated with an electric motor comprising a commutator (6), the return force exerted on the arm (7) moves the arm (7) in a direction in which it moves closer to the commutator (6).

7. Assembly according to one of the preceding claims, wherein the pivot connection element (10) is overmoulded or captively retained on the support (2) and/or on the arm (7).

8. Blower for a heating, ventilation and/or air conditioning device for a motor vehicle, comprising an electric motor provided with a commutator (6) and with an assembly (1) according to one of the preceding claims, the assembly (1) being shaped such that the brush (5) is pressed against the commutator (6) in an operating position of the blower.

9. Blower according to the preceding claim, wherein the assembly (1) comprises two brushes (5) and a brush movement device (7, 10) associated with each brush (5), which devices are called first and second movement devices, each brush movement device being secured to the support (2) by a securing part (10), and wherein the support has an annular shape, the securing part of the first device being diametrically opposite the securing part of the second device, and each pivot connection element being shaped so that, in a rest position, the associated arm extends along a radius of the support.
